# EUROPEAN PATENT SPECIFICATION

(11) **EP 4 566 446 B1**
(45) Date of publication and mention of the grant of the patent: **24.06.2026**
(21) Application number: 24218005.7
(22) Date of filing: 06.12.2024
(51) Int. Cl.: A01K 29/00, A01K 11/00

(54) **A METHOD AND APPARATUS FOR PROVIDING DATA INDICATIVE OF HEAT STRESS IN A RUMINANT USING AN ACTIVITY MEASUREMENT UNIT**
VERFAHREN UND VORRICHTUNG ZUR BEREITSTELLUNG VON DATEN ZUR ANZEIGE VON HITZESTRESS BEI WIEDERKÄUERN UNTER VERWENDUNG EINER AKTIVITÄTSMESSEINHEIT
PROCÉDÉ ET APPAREIL POUR FOURNIR DES DONNÉES INDIQUANT LE STRESS THERMIQUE CHEZ UN RUMINANT À L'AIDE D'UNE UNITÉ DE MESURE D'ACTIVITÉ

(30) Priority: 08.12.2023 NL 2036473
(43) Date of publication of application: 11.06.2025
(73) Proprietor: Nedap N.V., 7141 DC Groenlo (NL)
(72) Inventor: SCHUTTE, Jort Johannes Wilhelmus, 7141 DC Groenlo (NL)
(74) Representative: V.O.

(56) References cited:
- NL-B1- 2 027 103
- US-A1- 2020 229 391
- MARCONE G ET AL: "Panting scores as a measure of heat stress evaluation in sheep with access and with no access to shade", APPLIED ANIMAL BEHAVIOUR SCIENCE, ELSEVIER, AMSTERDAM, NL, vol. 240, 12 May 2021 (2021-05-12), XP086601692, ISSN: 0168-1591, [retrieved on 20210512], DOI: 10.1016/J.APPLANIM.2021.105350

## Description

### FIELD OF THE INVENTION

The present invention relates to the field of providing data indicative of the physiological condition of a ruminant. In particular, the invention relates to the field of providing data indicative of heat stress in a ruminant. More in particular, the invention relates to a method for providing data indicative of heat stress in a ruminant using an activity measurement unit, a ruminant activity measurement unit, and a ruminant management system for managing data indicative of heat stress in a ruminant.

### BACKGROUND

In the farming industry, in particular the ruminant farming industry, the health of animals is monitored manually by analyzing for each animal physical appearance, body temperature, respiration rate, and/or a blood, milk and/or urine sample. The ruminants can be cows, goats, sheep, bovines, deer or the like. In order to analyze these ruminant characteristics and/or samples, a farmer has to obtain such characteristics relating to physical appearance, body temperature, respiration rate and/or a blood, milk and/or urine sample of each animal to be analyzed. It is known to manually observe physical appearance features, measure body temperature, detect respiration rate and/or collect a portion of blood, milk and/or urine by a vet or a farmer. Tests for analyzing the ruminant characteristics and/or samples are performed either on site or in a laboratory. The results obtained from analyzing the ruminant characteristics and/or samples provide a farmer insight in the medical physiological condition of the animal, and can comprise data indicative of the medical characteristics and/or substance levels of the sample of the ruminant.

This data relating to the ruminant's physiological condition can comprise indicators for health status, such as data indicative of heat stress. A ruminant exhibits signs of heat stress if it fails to control its body temperature. Heat stress causes e.g. a decrease in feed intake and milk yield of the heat stressed ruminant. Factors that influence the heat exchange ability and/or the heat exchange rate of the ruminant are a.o. air temperature, radiant temperature, air velocity and humidity. The heat exchange comprises heat transfer between the ruminant and its surroundings via convection, conduction and/or radiation.

Based on the analyzed physiological condition, the farmer can gain insight in the needs of the ruminant for optimizing animal wellbeing, decreasing health risks, and increasing the yield of the ruminant-related products being produced at the farm. The adjustments attributing to ruminant-directed farm improvements can be tailored to suit each specific ruminant based on the insights related to the analyzed physiological condition of the ruminant. Monitoring the physiological condition of ruminants by manually observing physical appearance features, measuring body temperature, detecting respiration rate and/or collecting blood, milk and/or urine samples and subsequently analyzing the ruminant characteristics and/or samples is time-consuming and expensive for a farmer and/or vet.

A method and device for providing data indicative of heat stress in a ruminant using an activity measurement unit is for example described in US 2020/229391 A1.

The use of panting scores as a measure of heat stress is for example described in MARCONE G ET AL: "Panting scores as a measure of heat stress evaluation in sheep with access and with no access to shade", APPLIED ANIMAL BEHAVIOUR SCIENCE, ELSEVIER, AMSTERDAM, NL, vol. 240, 12 May 2021 (2021-05-12).

### SUMMARY

It is an object to provide a method for providing data indicative of heat stress in a ruminant using an activity measurement unit, a ruminant activity measurement unit, and a ruminant management system for managing data indicative of heat stress in a ruminant.

Thereto, according to a first aspect is provided a method for providing data indicative of heat stress in a ruminant using an activity measurement unit. The ruminant can be a cow, goat, sheep, bovine, deer or the like. Data indicative of heat stress comprises data associated with the ruminant's ability to control its body temperature. The activity measurement unit comprises a motion sensor and a processor. The activity measurement unit is attached to the ruminant. The activity measurement unit can be attached to the ruminant by means of a collar, earring or chip in, at or around the head or neck of the ruminant. The method comprises measuring, using the motion sensor, ruminant movement of the ruminant over time. The ruminant movement can comprise movement of at least a part of the ruminant with respect to the solid world. The movement of at least a part of the ruminant can comprise the movement of the part of the ruminant where the activity measurement unit is attached to. The method comprises determining, using the processor, that the measured ruminant movement is a repetitive movement indicative of either panting or rumination. In the step of determining, it can be determined that at least one of panting or rumination is indicated by the measured ruminant movement, without yet distinguishing therebetween. Thus, during the step of determining, it is determined that the repetitive movement is indicative of the ruminant being either panting or ruminating, without yet distinguishing between the ruminant doing either panting, ruminating or both. Thus the fact that a repetitive movement which is indicative of either action (panting and/or ruminating) is determined, without yet distinguishing whether the measured ruminant movement is indicative of panting or whether the measured ruminant movement is indicative of ruminating or both. The reason for this is that a movement pattern indicative of panting and a movement pattern indicative of rumination both comprise one or more similar parameter values. The movement patterns indicative of panting and of rumination can at least partially overlap, can comprise at least partially a similar shape and/or are at least partially in close proximity of each other.

The method for the above reason further comprises a step of establishing, using the processor, at least one of whether the repetitive movement is indicative of panting or whether the repetitive movement is indicative of ruminating or both. The movement pattern associated with the ruminant can comprise one or more similar repetitive movements. The establishing can be performed separately for predetermined segments of the repetitive movement or for the entire repetitive movement at once. The step of establishing comprises the step of detecting, from the measured ruminant movement, using the processor, the occurrence of a belch action. The step of establishing further comprises the step of identifying, when for at least a predetermined time period the occurrence of the belch action is absent, that the repetitive movement is indicative of panting, for providing said data indicative of heat stress. When the repetitive movement is indicative of panting, the ruminant actively increases its heat loss with this behaviour. Panting can be an indication of heat stress in the ruminant. Providing data indicative of heat stress in a ruminant according to the method disclosed herein allows a farmer or vet to monitor the physiological condition of ruminants more easily, enabling that immediate action can be taken when heat stress occurs. The measurement of ruminant movement by the activity measurement unit reduces or obviates the need to manually observe health characteristics indicating the physical condition and/or to collect blood, milk and/or urine samples. Subsequently establishing, using the processor, whether the measured ruminant movement is indicative of panting or whether the repetitive movement is indicative of ruminating saves time and costs of separately analyzing the manually observed health characteristics and/or collected blood, milk and/or urine samples. Moreover, eliminating or reducing the required manual observation and analyzation actions can result in less false observations and/or false diagnoses, since human errors are removed or reduced therewith.

Optionally, in the step of detecting the occurrence of the belch action, the measured ruminant movement includes the belch action when the ruminant movement comprises at least one time instance wherein an intensity of the ruminant movement is below a first predetermined value. The intensity of the ruminant movement during a belch action can be lower than the average intensity of the ruminant movement during ruminating.

Optionally, the method further comprises identifying, using the processor, when the occurrence of the belch action is detected, that the ruminant is ruminating. The fact that the ruminant is identified to be ruminating might not indicate whether the ruminant has heat stress or not.

Optionally, the step of measuring ruminant movement comprises detecting a movement frequency of the repetitive ruminant movement over time. The movement frequency can be detected from the translational movement of the ruminant and/or from the angular movement of the ruminant. The detected movement frequency can also be indicative of whether the ruminant is moving, e.g. walking, bending, standing up, lying down and/or sitting.

Optionally, the method further comprises, after the step of establishing at least one of whether the repetitive movement is indicative of panting or whether the repetitive movement is indicative of ruminating, establishing a panting frequency or a rumination frequency. The panting frequency or rumination frequency can comprise data indicative of whether or not the ruminant is showing signs of heat stress.

Optionally, the step of measuring ruminant movement comprises detecting when the ruminant movement is below a first predetermined frequency. If the measured ruminant movement is detected to be below the first predetermined frequency, this can be indicative of one or more belch actions of the ruminant. The frequency of the ruminant movement during a belch action can be lower than the average frequency of the ruminant movement during ruminating.

Optionally, the method further comprises determining, using the processor, the time period between subsequent detected belch actions. The ruminant can be identified to be panting when the determined time period between belch actions exceeds a threshold time period. The ruminant can be identified to be panting when the detected belch actions lie far apart in time. The panting can be indicative of heat stress in the ruminant.

Optionally, the method further comprises determining, using the processor, the belch frequency of detected belch actions. The belch frequency can be indicative of the type of food that the ruminant is eating. Some types of food can cause the belch frequency of the ruminating ruminant to be higher than others.

Optionally, the ruminant is identified to be panting when the determined belch frequency of belch actions is below a threshold frequency. The panting can be indicative of the ruminant showing signs of heat stress. The threshold frequency can be associated with the threshold time period that, when the time period between belch actions exceeds the threshold time period, identifies the ruminant to be panting.

Optionally, the method further comprises communicating a warning signal when the ruminant is identified to be panting. The warning signal can be an auditive or visual signal or a combination thereof.

Optionally, the method further comprises a step of obtaining, using a transponder attached to the ruminant, identification data of a ruminant. For example, the transponder in accordance with these embodiments, may be designed for providing identification data associated with the ruminant. This can be identifier data that uniquely identifies the transponder, whereas identifier data of the transponder may in turn be associated with a ruminant identifier of the ruminant. Association data therefore may be stored in the ruminant management system. Alternatively or additionally, it is also possible that a ruminant identifier is stored directly into the transponder, enabling the transponder to transmit this data. Optionally, the identification data that may be transmitted by the transponder may additionally be accompanied by characteristics of the physical condition or general physiological characteristics of the respective ruminant.

Optionally, the method further comprises a step of calculating a total time the ruminant is identified to be panting. The total time the ruminant is identified to be panting can comprise the sum of multiple time periods wherein the ruminant is identified to be panting. The total time the ruminant is identified to be panting can be indicative of the severity or the amount of heat stress that said ruminant experiences.

Optionally, the method further comprises a step of determining, based on the measured ruminant movement, panting characteristics when the ruminant is identified to be panting. The panting characteristics can be indicative of the severity and/or the amount of heat stress that the ruminant is experiencing.

Optionally, the method further comprises communicating panting characteristics when the ruminant is identified to be panting. The communication of panting characteristics can ensure the farmer or vet gains insight into the panting characteristics, and therefore that he gains insight in the data indicative of heat stress.

Optionally, the method further comprises a step of calculating a total rumination time the ruminant is identified to be ruminating. Optionally, the total rumination time is divided by the number of belch actions detected during that time. The total rumination time can be used, e.g. in combination with the number of belch actions, in analyzing the data indicative of heat stress of the ruminant. The total rumination time divided by the number of belch actions can be indicative of the severity or the amount of heat stress that the ruminant is experiencing.

Optionally, the method further comprises measuring location information of the ruminant. The measured location information can comprise information on whether, how frequently and for what time period the ruminant is in a sunny area and in a shaded area. When the ruminant is measured to be moving from a sunny area into a shaded area, this could be an indication of an increased risk on the occurrence or development of heat stress. The steps of measuring ruminant movement of the ruminant over time to establish whether the ruminant is panting or ruminating, can be performed after detecting that the ruminant is measured to be moving from a sunny area into a shaded area.

According to a second aspect is provided an ruminant activity measurement unit for providing data indicative of heat stress in a ruminant. The activity measurement unit is attached to the ruminant. The activity measurement unit comprises a motion sensor configured for measuring ruminant movement of the ruminant over time. The motion sensor can comprise a pressure sensor, orientation sensor, translational motion sensor, angular motion sensor, translational velocity sensor and/or angular velocity sensor. The activity measurement unit comprises a processor. The processor is configured for executing the step of determining, from the measured ruminant movement, that the measured ruminant movement is a repetitive movement indicative of either panting or rumination. A movement pattern indicative of panting and a movement pattern indicative of rumination both comprise one or more similar parameter values. The processor is configured for executing the step of detecting, from the measured ruminant movement, the occurrence of a belch action. The processor is configured for executing the step of identifying, when for at least a predetermined time period the occurrence of the belch action is absent, that the repetitive movement is indicative of panting, for providing said data indicative of heat stress.

Optionally, in the step of detecting the occurrence of the belch action, the measured ruminant movement includes a belch action when the ruminant movement comprises at least one time instance wherein an intensity of the ruminant movement is below a first predetermined value.

Optionally, the processor is further configured for identifying, when the occurrence of the belch action is detected, that the ruminant is ruminating.

Optionally, the processor is further configured for detecting a movement frequency of the repetitive ruminant movement over time.

Optionally, the processor is further configured for, after the step of establishing at least one of whether the repetitive movement is indicative of panting or whether the repetitive movement is indicative of ruminating, establishing a panting frequency or a rumination frequency.

Optionally, the processor is further configured for detecting, when detecting the occurrence of the belch action, the belch action in the measured ruminant movement when the ruminant movement comprises at least one time instance wherein an intensity of the ruminant movement is below a first predetermined frequency.

Optionally, the processor is further configured for determining the time period between subsequent detected belch actions, and wherein the ruminant is identified to be panting when the determined time period between belch actions exceeds a threshold time period.

Optionally, the processor is further configured for determining the belch frequency of detected belch actions.

Optionally, the ruminant is identified to be panting when the determined belch frequency of belch actions is below a threshold frequency.

Optionally, the processor is further configured for communicating a warning signal when the ruminant is identified to be panting.

Optionally, the processor is further configured for obtaining, using a transponder attached to the ruminant, identification data of a ruminant.

Optionally, the processor is further configured for calculating a total time the ruminant is identified to be panting.

Optionally, the processor is further configured for providing data enabling to establish a location for providing location information of the ruminant. For example, this could be a signal strength or receipt time of a beacon signal, a base station signal or a signal from a different transponder. Any such data may be used in the system for triangulation in order to obtain location information. The location information may be calculated anywhere in the system, for example in an animal management server, but the transponder may also be configured for establishing its own location from signal information as mentioned above.

Optionally, the processor is further configured for determining, based on the measured ruminant movement, panting characteristics when the ruminant is identified to be panting.

Optionally, the processor is further configured for communicating panting characteristics when the ruminant is identified to be panting.

Optionally, the processor is further configured for calculating a total rumination time the ruminant is identified to be ruminating, and wherein the processor is optionally further configured for dividing the total rumination time by the number of belch actions detected during that time.

According to a third aspect is provided a ruminant management system for managing data indicative of heat stress in a ruminant. The ruminant management system comprises an activity measurement unit as described and a data storage device. The data storage device is configured for storing measured ruminant movement data, ruminant location information and/or ruminant identification data for providing said data indicative of heat stress for use in ruminant management.

It will be appreciated that any of the aspects, features and options described in view of the method for providing data indicative of heat stress in a ruminant apply equally to the ruminant activity measurement unit and/or the ruminant management system for managing data indicative of heat stress in a ruminant, and vice versa. It will also be clear that any one or more of the above aspects, features and options can be combined.

### BRIEF DESCRIPTION OF THE DRAWINGS

Embodiments of the present invention will now be described in detail with reference to the accompanying drawings in which:
Figure 1 shows an illustration of a schematic representation of an example of an ruminant activity measurement unit;
Figure 2 shows an exemplary flow chart of a method of providing data indicative of heat stress in a ruminant using an activity measurement unit;
Figure 3 shows an exemplary flow chart of a method for establishing at least one of whether the repetitive movement is indicative of panting or whether the repetitive movement is indicative of ruminating or both comprised in step 110 of Figure 2; and
Figure 4 shows an illustration of a schematic representation of an example of a system for managing data indicative of heat stress in a ruminant.

### DETAILED DESCRIPTION

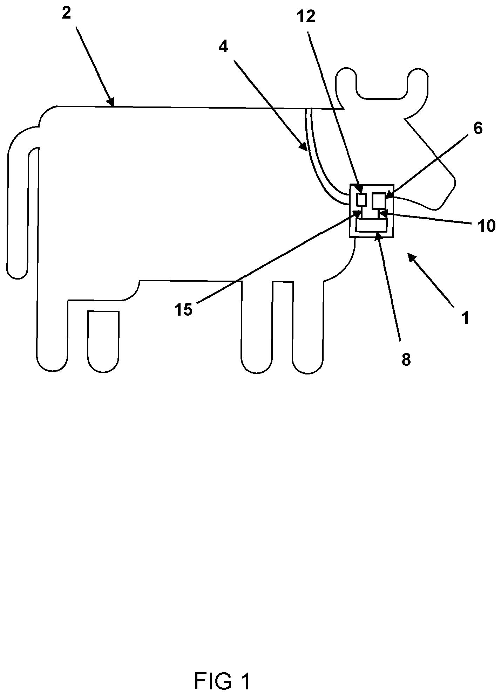

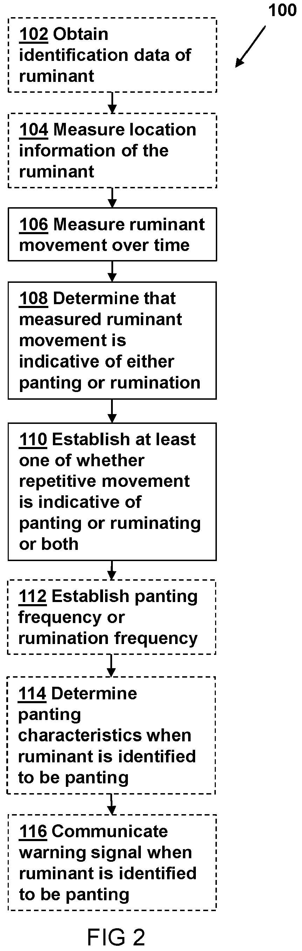

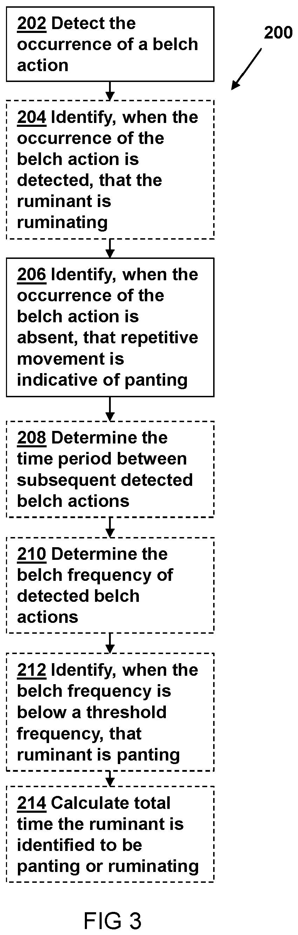

Figure 1 shows an illustration of a schematic representation of an example of an activity measurement unit 1 for providing data indicative of heat stress in a ruminant 2. The activity measurement unit 1 is attached to the ruminant 2. In this example, the activity measurement unit 1 is attached to a collar 4 such that it is positioned around the neck of the ruminant 2. The activity measurement unit 1 comprises in this example a motion sensor 6, a processor 8 and a transponder 12. The motion sensor can comprise a pressure sensor, orientation sensor, translational motion sensor, angular motion sensor, translational velocity sensor and/or angular velocity sensor. The motion sensor 6 and the processor 8 are in this example connected by a wireline connection 10 enabling communication therebetween. The motion sensor 6 is configured for executing step 106 of method 100 as described in view of Figure 2 of measuring ruminant movement of the ruminant 2 over time. The ruminant movement measured by the motion sensor 6 in step 106 may comprise one or more movement patterns being indicative of panting or rumination. The processor 8 is configured for executing the steps 102, 104 and 108-116 of method 100 and the steps of method 200 as described in view of Figures 2 and 3. The processor 8 is configured for providing, by executing the described method steps, said data indicative of heat stress.

Here, the transponder 12 is attached to the ruminant 2 for transmitting data, such as identification data of said ruminant 2 and/or other data. The processor 8 is in this example further configured for providing, using the transponder 12, said identification data of the ruminant 2. In this example, the transponder 12 is integrated with the activity measurement unit 1. It will be appreciated that the transponder 12 can alternatively be attached separately to the ruminant 2 by means of a chip, collar, earring or bracelet. It will be appreciated that alternatively the transponder 12 can be located in an external device away from the ruminant 2 instead. Here, the transponder 12 is configured for communicating with the processor 8 via a wireline connection 15 to obtain identification data indicative of the ruminant 2. The identification data of the ruminant 2 may be accompanied by data relating to a location and/or a position of the respective ruminant 2. For example, this could be a signal strength or receipt time of a beacon signal, a base station signal or a signal from a different transponder. Any such data may be used in the system for triangulation in order to obtain location information for the unit 1. It will be appreciated that the transponder 12 can be configured for wirelessly communicating with the processor 8 instead. The identification data can be obtained, as provided, by wireless communication using e.g. Wireless Fidelity, WiFi, Radio Frequency Identification, RFID, or Real Time Location Systems, RTLS, such as Infrared RTLS or Ultra Wide-Band, UWB, RTLS.

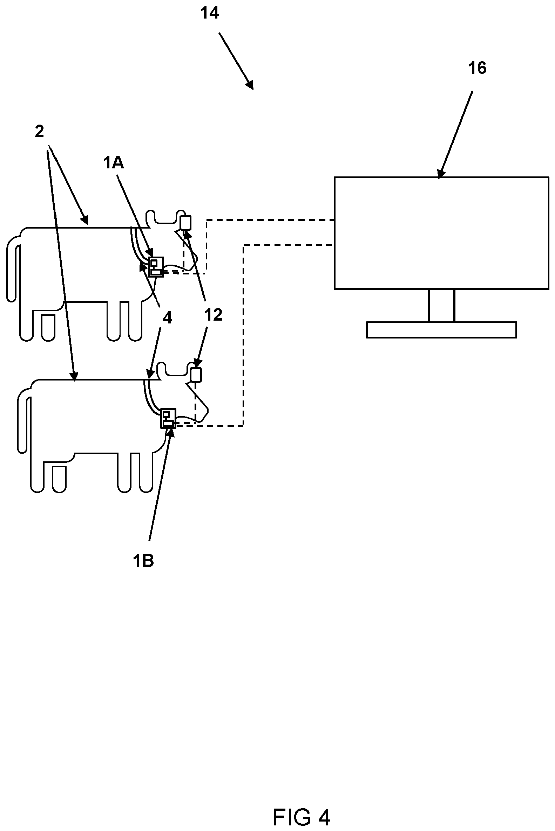

Figure 2 shows an example of a flow chart of a method 100 for providing data indicative of heat stress in a ruminant 2 using an activity measurement unit 1. The method 100 can e.g. be performed using an activity measurement unit 1 as described in view of Figure 1 or 4. In this example of the method 100 the steps are performed in the following order. Optional steps are shown in dashed boxes. In this example, in a first step 102 identification data of the ruminant 2 is obtained, using the transponder 12 attached to the ruminant 2. The identification data in this example may be accompanied by further data including characteristics of the physical condition and/or general physiological characteristics of the respective ruminant 2. In step 104, location information of the ruminant 2 is obtained in this example. The location information can be aggregated and used to provide information on whether, how frequently and for what time period the ruminant 2 is in a sunny area and in a shaded area. A risk of the development of heat stress can occur when the ruminant 2 is determined to be located in a sunny area for a certain time period, or for a certain amount of times within a predetermined time period. When the ruminant 2 is found to be moving from a sunny area into a shaded area, there could be a risk of the development of heat stress as it may indicate that the ruminant is seeking coolness. The step of measuring ruminant movement of the ruminant 2 over time can be performed after detecting that the ruminant 2 is measured to be moving from a sunny area into a shaded area.

The ruminant movement of the ruminant 2 is measured over time, using the motion sensor 6, in step 106. Here, the step 106 comprises detecting a movement frequency of the repetitive ruminant movement over time. The ruminant movement can comprise movement of at least a part of the ruminant with respect to the solid world. In this example, since the activity measurement unit 1 is attached to the collar 4 of the ruminant 2, the measured ruminant movement comprises the movement of the entire ruminant 2, the movement of the head of the ruminant 2 and the movement of the jaw of the ruminant 2 combined. The movement frequency is in this example detected from the translational movement of the ruminant 2 and from the angular movement of the ruminant 2. The detected movement frequency can also be indicative of whether the ruminant is moving, e.g. walking, bending, standing up, lying down and/or sitting. Step 106 in this example further comprises detecting when the ruminant movement is below a first predetermined frequency. If the measured ruminant movement is detected to be below the first predetermined frequency, this can be indicative of one or more belch actions of the ruminant 2. The frequency of the ruminant movement during a belch action can be lower than the average frequency of the ruminant movement during ruminating.

In step 108, it is determined, using the processor 8, that the measured ruminant movement is a repetitive movement. This repetitive movement is indicative of either panting or rumination, although it is not possible based on the repetitive movement alone to distinguish between rumination or panting. It is thus only clear that the ruminant is doing one or the other or both. In the step 108, it can thus be determined that at least one of panting or rumination is indicated by the measured ruminant movement. It will be appreciated that during the step 108, it is not yet determined whether the measured ruminant movement is indicative of panting or whether the measured ruminant movement is indicative of ruminating or both. A movement pattern indicative of panting and a movement pattern indicative of rumination both comprise one or more similar parameter values. At least one of whether the repetitive movement is indicative of panting or whether the repetitive movement is indicative of ruminating or both is established, using the processor 8, in step 110. When the repetitive movement is indicative of panting, the ruminant actively increases its heat loss with this behaviour. Panting is in this example an indication of heat stress in the ruminant.

In this example, a panting frequency or a rumination frequency is established in step 112. Step 112 is performed after step 110. The panting frequency or rumination frequency can comprise data indicative of whether or not the ruminant is showing signs of heat stress. When the ruminant is identified to be panting, panting characteristics are determined in step 114, based on the measured ruminant movement in this example. The panting characteristics can be indicative of the severity and/or the amount of heat stress that the ruminant 2 is experiencing. The step 114 can comprise communicating panting characteristics when the ruminant 2 is identified to be panting. The communication of panting characteristics can ensure the farmer or vet gains insight into the panting characteristics, and therefore that he gains insight in the data indicative of heat stress. Here, in step 116, a warning signal is communicated when the ruminant 2 is identified to be panting. The warning signal is in this example communicated through a visual signal shown on a display.

The step 110 of establishing at least one of whether the repetitive movement is indicative of panting or whether the repetitive movement is indicative of ruminating or both comprises the steps as described in view of method 200. Figure 3 shows an example of a flow chart of a method 200 for establishing at least one of whether the repetitive movement is indicative of panting or whether the repetitive movement is indicative of ruminating or both comprised in step 110 of method 100. The method 200 can e.g. be performed using the processor 8 of an activity measurement unit 1 as described in view of Figures 1 or 4. In this example of the method 200 the steps are performed in the following order. Optional steps are shown in dashed boxes. In a first step 202, the occurrence of a belch action is detected, from the measured ruminant movement, using the processor 8. Here, in the step 202, the measured ruminant movement includes the belch action when the ruminant movement comprises at least one time instance wherein an intensity of the ruminant movement is below a first predetermined value.

In step 204, it is in this example identified, using the processor 8, when the occurrence of the belch action is detected, that the ruminant is ruminating. The fact that the ruminant is identified to be ruminating in step 204 does in this example not directly indicate whether the ruminant shows signs of heat stress or not. The method 200 comprises identifying that the repetitive movement is indicative of panting, when for at least a predetermined time period the occurrence of the belch action is absent, for providing said data indicative of heat stress in step 206. The belch action could be absent completely for long periods of time, in which case the occurrence of heat stress alone is clear, because it is not possible to ruminate without belch action. The belch action could be present but only sporadically, for example the belch actions occur with long pauses in between in which only the repetitive movement can be measured. In this case, the occurrence of heat stress is very likely and therefore this movement pattern may be classified as heat stress. Belch actions could be measured frequently, in which case rumination takes place. It is to be noted that the frequency of belch actions during rumination is dependent on for example the type of feed. Therefore the fact that the ruminant is identified to be ruminating in step 206 does not necessarily indicate whether the ruminant has heat stress or not. In this example, the time period between subsequent detected belch actions is determined, using the processor 8, in step 208. In step 208, the ruminant can be identified to be panting when the determined time period between belch actions exceeds a threshold time period. The ruminant can be identified to be panting when the detected belch actions lie far apart in time. The panting can be indicative of heat stress in the ruminant.

The belch frequency of detected belch actions is determined, using the processor 8, in step 210 in this example. The belch frequency can be indicative of the type of food that the ruminant is eating. Some types of food can cause the belch frequency of the ruminating ruminant to be higher than others. The method 200 in this example comprises that the ruminant is identified to be panting when the determined belch frequency of belch actions is below a threshold frequency in step 212. The threshold frequency can be associated with the threshold time period of step 208. Here, in step 214 a total time the ruminant 2 is identified to be panting or ruminating is calculated. The total time the ruminant 2 is identified to be panting is the total panting time. The total time the ruminant 2 is identified to be ruminating is the total rumination time. Here, the total time the ruminant 2 is identified to be panting can comprise the sum of multiple time periods wherein the ruminant 2 is identified to be panting. The total time the ruminant 2 is identified to be panting can be indicative of the severity or the amount of heat stress that said ruminant 2 experiences. In this example, the total rumination time is divided by the number of belch actions detected during that time for providing data indicative of heat stress. The total rumination time can be used, e.g. in combination with the number of belch actions, in analyzing the data indicative of heat stress of the ruminant. The total rumination time divided by the number of belch actions can be indicative of the severity or the amount of heat stress that the ruminant is experiencing.

Figure 4 shows an illustrations of a schematic representation of an example of a system 14 for managing data indicative of heat stress in a ruminant 2. The system 14 comprises an activity measurement unit 1 such as the one described in view of Figure 1, wherein the transport 12 is in this example attached to the ruminant 2 by means of an earring, and a data storage device 16. The transponder 12 is in this example configured for wirelessly communicating with the processor 8 to obtain identification data indicative of the ruminant 2. The data storage device 16 is configured for storing measured ruminant movement data, ruminant location information and/or ruminant identification data for providing said data indicative of heat stress for use in ruminant management. In this example, the processor 8 is configured for wirelessly transmitting data indicative of heat stress in the ruminant 2 to a data storage device 16. It will be appreciated that the processor 8 can alternatively or additionally transmit data indicative of heat stress to the a mobile terminal unit.

Herein, the invention is described with reference to specific examples of embodiments of the invention. It will, however, be evident that various modifications and changes may be made therein, without departing from the scope of the invention as defined in the appended claims. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention, as defined in the appended claims, may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method for providing data indicative of heat stress in a ruminant using an activity measurement unit, the activity measurement unit comprising a motion sensor and a processor, wherein the activity measurement unit is attached to the ruminant, the method comprising:
- measuring, using the motion sensor, ruminant movement of the ruminant over time;
- determining, using the processor, that the measured ruminant movement is a repetitive movement indicative of either panting or rumination, wherein a movement pattern indicative of panting and a movement pattern indicative of rumination both comprise one or more similar parameter values; and
- establishing, using the processor, at least one of whether the repetitive movement is indicative of panting or whether the repetitive movement is indicative of ruminating or both;
wherein the step of establishing comprises the steps of:
- detecting, from the measured ruminant movement, using the processor, the occurrence of a belch action; and
- identifying, when for at least a predetermined time period the occurrence of the belch action is absent, that the repetitive movement is indicative of panting, for providing said data indicative of heat stress.

2. The method according to claim 1, wherein, in the step of detecting the occurrence of the belch action, the measured ruminant movement includes the belch action when the ruminant movement comprises at least one time instance wherein an intensity of the ruminant movement is below a first predetermined value.

3. The method according to claim 1 or 2, further comprising identifying, using the processor, when the occurrence of the belch action is detected, that the ruminant is ruminating.

4. The method according to claim 1, 2 or 3, wherein the step of measuring ruminant movement comprises detecting a movement frequency of the repetitive ruminant movement over time.

5. The method according to claim 4, wherein, after the step of establishing at least one of whether the repetitive movement is indicative of panting or whether the repetitive movement is indicative of ruminating, establishing a panting frequency or a rumination frequency.

6. The method according to claim 4 or 5, when dependent on claim 2, wherein the step of measuring ruminant movement comprises detecting when the ruminant movement is below a first predetermined frequency.

7. The method according to any of the preceding claims, further comprising determining, using the processor, the time period between subsequent detected belch actions, wherein the ruminant is identified to be panting when the determined time period between belch actions exceeds a threshold time period.

8. The method according to any of the preceding claims, further comprising determining, using the processor, the belch frequency of detected belch actions.

9. The method according to claim 8, wherein the ruminant is identified to be panting when the determined belch frequency of belch actions is below a threshold frequency.

10. The method according to any of the preceding claims, further comprising communicating a warning signal when the ruminant is identified to be panting.

11. The method according to any of the preceding claims, further comprising a step of obtaining, using a transponder attached to the ruminant, identification data of a ruminant.

12. The method according to any of the preceding claims, further comprising a step of calculating a total time the ruminant is identified to be panting.

13. The method according to any of the preceding claims, further comprising a step of determining, based on the measured ruminant movement, panting characteristics when the ruminant is identified to be panting.

14. The method according to any of the preceding claims, further comprising communicating panting characteristics when the ruminant is identified to be panting.

15. The method according to any of claims 3-14, when dependent on claim 3, further comprising a step of calculating a total rumination time the ruminant is identified to be ruminating, wherein optionally the total rumination time is divided by the number of belch actions detected during that time.

16. The method according to any of the preceding claims, further comprising determining location information of the ruminant.

17. An ruminant activity measurement unit for providing data indicative of heat stress in a ruminant, wherein the activity measurement unit is attached to the ruminant, comprising:
- a motion sensor configured for measuring ruminant movement of the ruminant over time; and
- a processor configured for executing the steps of:
- determining, from the measured ruminant movement, that the measured ruminant movement is a repetitive movement indicative of either panting or rumination, wherein a movement pattern indicative of panting and a movement pattern indicative of rumination both comprise one or more similar parameter values;
- detecting, from the measured ruminant movement, the occurrence of a belch action; and
- identifying, when for at least a predetermined time period the occurrence of the belch action is absent, that the repetitive movement is indicative of panting, for providing said data indicative of heat stress.

18. The ruminant activity measurement unit according to claim 17, wherein, in the step of detecting the occurrence of the belch action, the measured ruminant movement includes a belch action when the ruminant movement comprises at least one time instance wherein an intensity of the ruminant movement is below a first predetermined value.

19. The ruminant activity measurement unit according to claim 17 or 18, wherein the processor is further configured for identifying, when the occurrence of the belch action is detected, that the ruminant is ruminating.

20. The ruminant activity measurement unit according to claim 17, 18 or 19, wherein the processor is further configured for detecting a movement frequency of the repetitive ruminant movement over time.

21. The ruminant activity measurement unit according to claim 20, wherein the processor is further configured for, after the step of establishing at least one of whether the repetitive movement is indicative of panting or whether the repetitive movement is indicative of ruminating, establishing a panting frequency or a rumination frequency.

22. The ruminant activity measurement unit according to claim 20 or 21, when dependent on claim 18, wherein the processor is further configured for detecting, when detecting the occurrence of the belch action, the belch action in the measured ruminant movement when the ruminant movement comprises at least one time instance wherein an intensity of the ruminant movement is below a first predetermined frequency.

23. The ruminant activity measurement unit according to any of claims 17-22, wherein the processor is further configured for determining the time period between subsequent detected belch actions, and wherein the ruminant is identified to be panting when the determined time period between belch actions exceeds a threshold time period.

24. The ruminant activity measurement unit according to any of claims 17-23, wherein the processor is further configured for determining the belch frequency of detected belch actions.

25. The ruminant activity measurement unit according to claim 24, wherein the ruminant is identified to be panting when the determined belch frequency of belch actions is below a threshold frequency.

26. The ruminant activity measurement unit according to any of claims 17-25, wherein the processor is further configured for communicating a warning signal when the ruminant is identified to be panting.

27. The ruminant activity measurement unit according to any of claims 17-26, wherein the processor is further configured for obtaining, using a transponder attached to the ruminant, identification data of a ruminant.

28. The ruminant activity measurement unit according to any of claims 17-27, wherein the processor is further configured for calculating a total time the ruminant is identified to be panting.

29. The ruminant activity measurement unit according to any of claims 17-28, wherein the processor is further configured for determining location information of the ruminant.

30. The ruminant activity measurement unit according to any of claims 17-29, wherein the processor is further configured for determining, based on the measured ruminant movement, panting characteristics when the ruminant is identified to be panting.

31. The ruminant activity measurement unit according to any of claims 17-30, wherein the processor is further configured for communicating panting characteristics when the ruminant is identified to be panting.

32. The ruminant activity measurement unit according to claim 19, or according to any of claims 20-31 when dependent on claim 19, wherein the processor is further configured for calculating a total rumination time the ruminant is identified to be ruminating, and wherein the processor is optionally further configured for dividing the total rumination time by the number of belch actions detected during that time.

33. A ruminant management system for managing data indicative of heat stress in a ruminant, comprising an activity measurement unit according to any of claims 17-32 and a data storage device, wherein the data storage device is configured for storing measured ruminant movement data, ruminant location information and/or ruminant identification data for providing said data indicative of heat stress for use in ruminant management.

## Patentansprüche

1. Verfahren zur Bereitstellung von Daten die auf Hitzestress bei Wiederkäuern hinweisen unter Verwendung einer Aktivitätsmesseinheit, die Aktivitätsmesseinheit umfassend einen Bewegungssensor und einen Prozessor, wobei die Aktivitätsmesseinheit am Wiederkäuer angebracht ist und das Verfahren umfassend:
- Messen, unter Verwendung des Bewegungssensors, der Wiederkäuerbewegung des Wiederkäuers im Zeitverlauf;
- Bestimmen, unter Verwendung des Prozessors, dass die gemessene Wiederkäuerbewegung eine sich wiederholende Bewegung ist, die entweder auf Hecheln oder Wiederkäuen hinweisen, wobei ein Bewegungsmuster, das auf Hecheln hinweist, und ein Bewegungsmuster, das auf Wiederkäuen hinweist, beide einen oder mehrere ähnliche Parameterwerte umfassen; und
- Feststellen, unter Verwendung des Prozessors, zumindest entweder, ob die wiederholte Bewegung auf Hecheln hinweist oder ob die wiederholte Bewegung auf Wiederkäuen hinweist, oder auf beides;
wobei der Schritt des Feststellens die folgenden Schritte umfasst:
- Erkennen, unter Verwendung des Prozessors, aus der gemessenen Wiederkäuerbewegung das Auftreten einer Ruktationsaktion; und
- Identifizieren, wenn für mindestens einen vorbestimmten Zeitraum das Auftreten der Ruktationsaktion fehlt, dass die wiederholte Bewegung auf Hecheln hinweist, um die Daten bereitzustellen, die auf Hitzestress hinweisen.

2. Verfahren nach Anspruch 1, wobei, im Schritt des Erkennens des Auftretens der Ruktationsaktion, die gemessene Wiederkäuerbewegung die Ruktationsaktion einschließt, wenn die Wiederkäuerbewegung mindestens eine Zeitinstanz umfasst, in der eine Intensität der Wiederkäuerbewegung unter einem ersten vorbestimmten Wert liegt.

3. Verfahren nach Anspruch 1 oder 2, ferner umfassend das Ermitteln, unter Verwendung des Prozessors, wenn das Auftreten der Ruktationsaktion erkannt wird, dass der Wiederkäuer wiederkäut.

4. Verfahren nach Anspruch 1, 2 oder 3, wobei der Schritt des Messens der Wiederkäuerbewegung das Erkennen einer Bewegungsfrequenz der wiederholten Wiederkäuerbewegung im Laufe der Zeit umfasst.

5. Verfahren nach Anspruch 4, wobei nach dem Schritt des Feststellens mindestens der Tatsache, ob die wiederholte Bewegung auf Hecheln hinweist und/oder ob die wiederholte Bewegung auf Wiederkäuen hinweist, eine Hechelfrequenz oder eine Wiederkäufrequenz festgestellt wird.

6. Verfahren nach Anspruch 4 oder 5, wenn abhängig von Anspruch 2, wobei der Schritt des Messens der Wiederkäuerbewegung das Erkennen umfasst, wann die Wiederkäuerbewegung unterhalb einer ersten vorbestimmten Frequenz liegt.

7. Verfahren nach einem der vorhergehenden Ansprüche, ferner umfassend das Bestimmen, unter Verwendung des Prozessors, des Zeitraums zwischen aufeinanderfolgenden erkannten Ruktationsaktionen, wobei der Wiederkäuer als hechelnd identifiziert wird, wenn der bestimmte Zeitraum zwischen Ruktationsaktionen einen Schwellenzeitraum überschreitet.

8. Verfahren nach einem der vorhergehenden Ansprüche, ferner umfassend das Bestimmen, unter Verwendung des Prozessors, der Ruktationsfrequenz erkannter Ruktationsaktionen.

9. Verfahren nach Anspruch 8, wobei festgestellt wird, dass der Wiederkäuer hechelt, wenn die bestimmte Ruktationsfrequenz von Ruktationsaktionen unter einer Schwellenfrequenz liegt.

10. Verfahren nach einem der vorhergehenden Ansprüche, ferner umfassend das Kommunizieren eines Warnsignals, wenn der Wiederkäuer als hechelnd identifiziert wird.

11. Verfahren nach einem der vorhergehenden Ansprüche, ferner umfassend einen Schritt des Erlangens, unter Verwendung eines am Wiederkäuer angebrachten Transponders, von Identifikationsdaten eines Wiederkäuers.

12. Verfahren nach einem der vorhergehenden Ansprüche, ferner umfassend einen Schritt der Berechnung einer Gesamtzeit, in welcher der Wiederkäuer als hechelnd identifiziert wird.

13. Verfahren nach einem der vorhergehenden Ansprüche, ferner umfassend einen Schritt des Bestimmens, basierend auf der gemessenen Wiederkäuerbewegung, der Hechelcharakteristika, wenn der Wiederkäuer als hechelnd identifiziert wird.

14. Verfahren nach einem der vorhergehenden Ansprüche, ferner umfassend das Kommunizieren von Hechelcharakteristika, wenn der Wiederkäuer als hechelnd identifiziert wird.

15. Verfahren nach einem der Ansprüche 3-14, wenn abhängig von Anspruch 3, ferner umfassend einen Schritt des Berechnens einer gesamten Wiederkäuzeit, in welcher der Wiederkäuer als wiederkäuend identifiziert wird, wobei optional die gesamte Wiederkäuzeit durch die Anzahl der während dieser Zeit erkannten Ruktationsaktionen dividiert wird.

16. Verfahren nach einem der vorhergehenden Ansprüche, ferner umfassend das Bestimmen von Positionsinformationen des Wiederkäuers.

17. Wiederkäuer-Aktivitätsmesseinheit zur Bereitstellung von Daten die auf Hitzestress bei Wiederkäuern hinweisen, wobei die Aktivitätsmesseinheit am Wiederkäuer angebracht ist, umfassend:
- einen Bewegungssensor, konfiguriert zum Messen von Bewegung des Wiederkäuers im Laufe der Zeit; und
- einen Prozessor, konfiguriert zum Ausführen der folgenden Schritte:
- Bestimmen, aus der gemessenen Wiederkäuerbewegung, dass die gemessene Wiederkäuerbewegung eine sich wiederholende Bewegung ist, die entweder auf Hecheln oder auf Wiederkäuen hinweist, wobei ein Bewegungsmuster, das auf Hecheln hinweist, und ein Bewegungsmuster, das auf Wiederkäuen hinweist, beide einen oder mehrere ähnliche Parameterwerte umfassen;
- Erkennen des Auftretens einer Ruktationsaktion aus der gemessenen Wiederkäuerbewegung; und
- Identifizieren, wenn für mindestens einen vorbestimmten Zeitraum das Auftreten der Ruktationsaktion fehlt, dass die wiederholte Bewegung auf Hecheln hinweist, um die Daten bereitzustellen, die auf Hitzestress hinweisen.

18. Wiederkäuer-Aktivitätsmesseinheit nach Anspruch 17, wobei, im Schritt des Erkennens des Auftretens der Ruktationsaktion, die gemessene Wiederkäuerbewegung eine Ruktationsaktion einschließt, wenn die Wiederkäuerbewegung mindestens eine Zeitinstanz umfasst, in der eine Intensität der Wiederkäuerbewegung unter einem ersten vorbestimmten Wert liegt.

19. Wiederkäuer-Aktivitätsmesseinheit nach Anspruch 17 oder 18, wobei der Prozessor ferner dazu konfiguriert ist, beim Erkennen des Auftretens der Ruktationsaktion zu identifizieren, dass der Wiederkäuer wiederkäut.

20. Wiederkäuer-Aktivitätsmesseinheit nach Anspruch 17, 18 oder 19, wobei der Prozessor ferner dazu konfiguriert ist, eine Bewegungsfrequenz der sich wiederholenden Wiederkäuerbewegung im Laufe der Zeit zu erkennen.

21. Wiederkäuer-Aktivitätsmesseinheit nach Anspruch 20, wobei der Prozessor ferner dazu konfiguriert ist, nach dem Schritt des Feststellens mindestens der Tatsache, ob die wiederholte Bewegung auf Hecheln hinweist und/oder ob die wiederholte Bewegung auf Wiederkäuen hinweist , eine Hechelfrequenz oder eine Wiederkäufrequenz festzustellen.

22. Wiederkäuer-Aktivitätsmesseinheit nach Anspruch 20 oder 21, wenn abhängig von Anspruch 18, wobei der Prozessor ferner dazu konfiguriert ist, beim Erkennen des Auftretens der Ruktationsaktion die Ruktationsaktion in der gemessenen Wiederkäuerbewegung zu erkennen, wenn die Wiederkäuerbewegung mindestens eine Zeitinstanz umfasst, in der eine Intensität der Wiederkäuerbewegung unter einer ersten vorbestimmten Frequenz liegt.

23. Wiederkäuer-Aktivitätsmesseinheit nach einem der Ansprüche 17-22, wobei der Prozessor ferner dazu konfiguriert ist, den Zeitraum zwischen aufeinanderfolgenden erkannten Ruktationsaktionen zu bestimmen, und wobei der Wiederkäuer als hechelnd identifiziert wird, wenn der bestimmte Zeitraum zwischen Ruktationsaktionen einen Schwellenzeitraum überschreitet.

24. Wiederkäuer-Aktivitätsmesseinheit nach einem der Ansprüche 17-23, wobei der Prozessor ferner dazu konfiguriert ist, die Ruktationsfrequenz von erkannten Ruktationsaktionen zu bestimmen.

25. Wiederkäuer-Aktivitätsmesseinheit nach Anspruch 24, wobei der Wiederkäuer als hechelnd identifiziert wird, wenn die bestimmte Ruktationsfrequenz von Ruktationsaktionen unter einer Schwellenfrequenz liegt.

26. Wiederkäuer-Aktivitätsmesseinheit nach einem der Ansprüche 17-25, wobei der Prozessor ferner dazu konfiguriert ist, ein Warnsignal zu kommunizieren, wenn der Wiederkäuer als hechelnd identifiziert wird.

27. Wiederkäuer-Aktivitätsmesseinheit nach einem der Ansprüche 17-26, wobei der Prozessor ferner dazu konfiguriert ist, unter Verwendung eines am Wiederkäuer angebrachten Transponders Identifikationsdaten eines Wiederkäuers zu erhalten.

28. Wiederkäuer-Aktivitätsmesseinheit nach einem der Ansprüche 17-27, wobei der Prozessor ferner dazu konfiguriert ist, eine Gesamtzeit zu berechnen, über welche der Wiederkäuer als hechelnd identifiziert wird.

29. Wiederkäuer-Aktivitätsmesseinheit nach einem der Ansprüche 17-28, wobei der Prozessor ferner zum Bestimmen von Positionsinformationen des Wiederkäuers konfiguriert ist.

30. Wiederkäuer-Aktivitätsmesseinheit nach einem der Ansprüche 17-29, wobei der Prozessor ferner dazu konfiguriert ist, basierend auf der gemessenen Wiederkäuerbewegung Hechelcharakteristika zu bestimmen, wenn der Wiederkäuer als hechelnd identifiziert wird.

31. Wiederkäuer-Aktivitätsmesseinheit nach einem der Ansprüche 17-30, wobei der Prozessor ferner dazu konfiguriert ist, Hechelcharakteristika zu kommunizieren, wenn der Wiederkäuer als hechelnd identifiziert wird.

32. Wiederkäuer-Aktivitätsmesseinheit nach Anspruch 19 oder nach einem der Ansprüche 20-31, wenn abhängig von Anspruch 19, wobei der Prozessor ferner dazu konfiguriert ist, eine Gesamtwiederkäuzeit zu berechnen, in welcher der Wiederkäuer als wiederkäuend identifiziert wird, und wobei der Prozessor optional ferner dazu konfiguriert ist, die Gesamtwiederkäuzeit durch die Anzahl der während dieser Zeit erkannten Ruktationsaktionen zu dividieren.

33. Wiederkäuerverwaltungssystem zum Verwalten von Daten die auf Hitzestress bei einem Wiederkäuer hinweisen, umfassend eine Aktivitätsmesseinheit nach einem der Ansprüche 17-32 und eine Datenspeichervorrichtung, wobei die Datenspeichervorrichtung zum Speichern gemessener Wiederkäuerbewegungsdaten, Wiederkäuerpositionsinformationen und/oder Wiederkäueridentifikationsdaten konfiguriert ist, um diese Daten, auf Hitzestress hinweisen, zur Verwendung bei der Wiederkäuerverwaltung bereitzustellen.

## Revendications

1. Procédé pour fournir des données indiquant un stress thermique chez un ruminant à l'aide d'une unité de mesure d'activité, l'unité de mesure d'activité comprenant un capteur de mouvement et un processeur, dans lequel l'unité de mesure d'activité est fixée au ruminant, le procédé comprenant le fait de :
- mesurer, à l'aide du capteur de mouvement, un mouvement de ruminant du ruminant au fil du temps ;
- déterminer, à l'aide du processeur, que le mouvement de ruminant mesuré est un mouvement répétitif indiquant soit un halètement, soit une rumination, dans lequel un modèle de mouvement indiquant un halètement et un modèle de mouvement indiquant une rumination comprennent tous deux une ou plusieurs valeurs de paramètres similaires; et
- établir, à l'aide du processeur, au moins l'un parmi si le mouvement répétitif indique un halètement ou si le mouvement répétitif indique une rumination, ou les deux ;
dans lequel l'étape d'établissement comprend les étapes comprenant le fait de :
- détecter, à partir du mouvement de ruminant mesuré, à l'aide du processeur, la survenue d'une action de rot; et
- identifier, lorsque, pendant au moins une période de temps prédéterminée, la survenue de l'action de rot est absente, que le mouvement répétitif indique un halètement, afin de fournir lesdites données indiquant un stress thermique.

2. Procédé selon la revendication 1, dans lequel, dans l'étape de détection de la survenue de l'action de rot, le mouvement de ruminant mesuré comprend l'action de rot lorsque le mouvement de ruminant comprend au moins une instance temporelle dans laquelle une intensité du mouvement de ruminant est inférieure à une première valeur prédéterminée.

3. Procédé selon la revendication 1 ou 2, comprenant en outre le fait d'identifier, à l'aide du processeur, lorsque l'action de rot est détectée, que le ruminant rumine.

4. Procédé selon la revendication 1, 2 ou 3, dans lequel l'étape de mesure du mouvement de ruminant comprend le fait de détecter une fréquence de mouvement du mouvement de ruminant répétitif au fil du temps.

5. Procédé selon la revendication 4, dans lequel, après l'étape d'établissement d'au moins l'un parmi si le mouvement répétitif indique un halètement ou si le mouvement répétitif indique une rumination, le procédé comprend le fait d'établir une fréquence de halètement ou une fréquence de rumination.

6. Procédé selon la revendication 4 ou 5, lorsqu'elle dépend de la revendication 2, dans lequel l'étape de mesure du mouvement de ruminant comprend le fait de détecter lorsque le mouvement de ruminant est inférieur à une première fréquence prédéterminée.

7. Procédé selon l'une quelconque des revendications précédentes, comprenant en outre le fait de déterminer, à l'aide du processeur, la période de temps entre des actions de rot détectées subséquentes, dans lequel le ruminant est identifié comme haletant lorsque la période de temps déterminée entre les actions de rot dépasse une période de temps de seuil.

8. Procédé selon l'une quelconque des revendications précédentes, comprenant en outre le fait de déterminer, à l'aide du processeur, la fréquence de rot des actions de rot détectées.

9. Procédé selon la revendication 8, dans lequel le ruminant est identifié comme haletant lorsque la fréquence de rot déterminée des actions de rot est inférieure à une fréquence de seuil.

10. Procédé selon l'une quelconque des revendications précédentes, comprenant en outre le fait de communiquer un signal d'avertissement lorsque le ruminant est identifié comme haletant.

11. Procédé selon l'une quelconque des revendications précédentes, comprenant en outre une étape d'obtention, à l'aide d'un transpondeur fixé au ruminant, de données d'identification d'un ruminant.

12. Procédé selon l'une quelconque des revendications précédentes, comprenant en outre une étape de calcul d'un temps total pendant lequel le ruminant est identifié comme haletant.

13. Procédé selon l'une quelconque des revendications précédentes, comprenant en outre une étape de détermination, sur la base du mouvement de ruminant mesuré, de caractéristiques de halètement lorsque le ruminant est identifié comme haletant.

14. Procédé selon l'une quelconque des revendications précédentes, comprenant en outre le fait de communiquer les caractéristiques de halètement lorsque le ruminant est identifié comme haletant.

15. Procédé selon l'une quelconque des revendications 3 à 14, lorsqu'elle dépend de la revendication 3, comprenant en outre une étape de calcul d'un temps de rumination total pendant lequel le ruminant est identifié comme ruminant, dans lequel, éventuellement, le temps de rumination total est divisé par le nombre d'actions de rot détectées pendant ce temps.

16. Procédé selon l'une quelconque des revendications précédentes, comprenant en outre le fait de déterminer des informations de localisation du ruminant.

17. Unité de mesure d'activité de ruminant pour fournir des données indiquant un stress thermique chez un ruminant, dans laquelle l'unité de mesure d'activité est fixée au ruminant, comprenant :
- un capteur de mouvement configuré pour mesurer un mouvement de ruminant du ruminant au fil du temps ; et
- un processeur configuré pour exécuter les étapes comprenant le fait de :
- déterminer, à partir du mouvement de ruminant mesuré, que le mouvement de ruminant mesuré est un mouvement répétitif indiquant soit un halètement, soit une rumination, dans lequel un modèle de mouvement indiquant un halètement et un modèle de mouvement indiquant une rumination comprennent tous deux une ou plusieurs valeurs de paramètres similaires; et
- détecter, à partir du mouvement de ruminant mesuré, la survenue d'une action de rot ; et
- identifier, lorsque, pendant au moins une période de temps prédéterminée, la survenue de l'action de rot est absente, que le mouvement répétitif indique un halètement, afin de fournir lesdites données indiquant un stress thermique.

18. Unité de mesure d'activité de ruminant selon la revendication 17, dans laquelle, lors de l'étape de détection de la survenue de l'action de rot, le mouvement de ruminant mesuré comprend une action de rot lorsque le mouvement de ruminant comprend au moins une instance temporelle dans laquelle une intensité du mouvement de ruminant est inférieure à une première valeur prédéterminée.

19. Unité de mesure d'activité de ruminant selon la revendication 17 ou 18, dans laquelle le processeur est en outre configuré pour identifier, lorsque la survenue de l'action de rot est détectée, que le ruminant rumine.

20. Unité de mesure d'activité de ruminant selon la revendication 17, 18 ou 19, dans laquelle le processeur est en outre configuré pour détecter une fréquence de mouvement du mouvement de ruminant répétitif au fil du temps.

21. Unité de mesure d'activité de ruminant selon la revendication 20, dans laquelle le processeur est en outre configuré pour, après l'étape d'établissement d'au moins l'un parmi si le mouvement répétitif indique un halètement ou si le mouvement répétitif indique une rumination, établir une fréquence de halètement ou une fréquence de rumination.

22. Unité de mesure d'activité de ruminant selon la revendication 20 ou 21, lorsqu'elle dépend de la revendication 18, dans laquelle le processeur est en outre configuré pour détecter, lors de la détection de la survenue de l'action de rot, l'action de rot dans le mouvement de ruminant mesuré lorsque le mouvement de ruminant comprend au moins une instance temporelle dans laquelle une intensité du mouvement de ruminant est inférieure à une première fréquence prédéterminée.

23. Unité de mesure d'activité de ruminant selon l'une quelconque des revendications 17 à 22, dans laquelle le processeur est en outre configuré pour déterminer la période de temps entre des actions de rot détectées subséquentes, et dans laquelle le ruminant est identifié comme haletant lorsque la période de temps déterminée entre les actions de rot dépasse une période de temps de seuil.

24. Unité de mesure d'activité de ruminant selon l'une quelconque des revendications 17 à 23, dans laquelle le processeur est en outre configuré pour déterminer la fréquence de rot des actions de rot détectées.

25. Unité de mesure d'activité de ruminant selon la revendication 24, dans laquelle le ruminant est identifié comme haletant lorsque la fréquence de rot déterminée des actions de rot est inférieure à une fréquence de seuil.

26. Unité de mesure d'activité de ruminant selon l'une quelconque des revendications 17 à 25, dans laquelle le processeur est en outre configuré pour communiquer un signal d'avertissement lorsque le ruminant est identifié comme haletant.

27. Unité de mesure d'activité de ruminant selon l'une quelconque des revendications 17 à 26, dans laquelle le processeur est en outre configuré pour obtenir, à l'aide d'un transpondeur fixé au ruminant, des données d'identification d'un ruminant.

28. Unité de mesure d'activité de ruminant selon l'une quelconque des revendications 17 à 27, dans laquelle le processeur est en outre configuré pour calculer un temps total pendant lequel le ruminant est identifié comme haletant.

29. Unité de mesure d'activité de ruminant selon l'une quelconque des revendications 17 à 28, dans laquelle le processeur est en outre configuré pour déterminer des informations de localisation du ruminant.

30. Unité de mesure d'activité de ruminant selon l'une quelconque des revendications 17 à 29, dans laquelle le processeur est en outre configuré pour déterminer, sur la base du mouvement de ruminant mesuré, des caractéristiques de halètement lorsque le ruminant est identifié comme haletant.

31. Unité de mesure d'activité de ruminant selon l'une quelconque des revendications 17 à 30, dans laquelle le processeur est en outre configuré pour communiquer des caractéristiques de halètement lorsque le ruminant est identifié comme haletant.

32. Unité de mesure d'activité de ruminant selon la revendication 19, ou selon l'une quelconque des revendications 20 à 31 lorsqu'elle dépend de la revendication 19, dans laquelle le processeur est en outre configuré pour calculer un temps de rumination total pendant lequel le ruminant est identifié comme ruminant, et dans laquelle le processeur est en outre configuré, éventuellement, pour diviser le temps de rumination total par le nombre d'actions de rot détectées pendant ce temps.

33. Système de gestion de ruminant pour gérer des données indiquant un stress thermique chez un ruminant, comprenant une unité de mesure d'activité selon l'une quelconque des revendications 17 à 32, et un dispositif de stockage de données, dans lequel le dispositif de stockage de données est configuré pour stocker des données de mouvement de ruminant mesurées, des informations de localisation de ruminant et/ou des données d'identification de ruminant, afin de fournir lesdites données indiquant un stress thermique destinées à être utilisées dans le cadre de la gestion du ruminant.
